(19)

**Europäisches Patentamt**
**European Patent Office**
**Office européen des brevets**

(11) **EP 4 344 553 A1**

(12) **EUROPEAN PATENT APPLICATION**

(43) Date of publication:
**03.04.2024 Bulletin 2024/14**

(21) Application number: **22198945.2**

(22) Date of filing: **30.09.2022**

(51) International Patent Classification (IPC):
**A23K 50/42** (2016.01)  **A23K 40/30** (2016.01)

(52) Cooperative Patent Classification (CPC):
**A23K 50/42; A23K 40/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mars, Incorporated**
**McLean, VA 22101 (US)**

(72) Inventors:
• **COCHET, Jérôme**
  **30470 AIMARGUES (FR)**
• **GOYON, Annabelle**
  **30470 AIMARGUES (FR)**

(74) Representative: **Cabinet Nony**
**11 rue Saint-Georges**
**75009 Paris (FR)**

(54) **ANIMAL FOOD COMPOSITIONS WITH IMPROVED CUSTOMIZABILITY, AND METHODS FOR PREPARING THE SAME**

(57)     The present disclosure relates to methods for preparing and processing animal food compositions. It further relates to individualized and/or customized animal food compositions, and kits for preparing the same.

**EP 4 344 553 A1**

**Description**

**FIELD OF THE DISCLOSURE**

The present disclosure relates to methods for preparing and processing animal food compositions. It further relates to individualized and/or customized animal food compositions, and kits for preparing the same.

**BACKGROUND OF THE DISCLOSURE**

Customized diets for various life stages and conditions are available for animals, especially for companion animals. Nutritional needs, however, vary from pet to pet, and a customized regimen of appropriate nutrients for a particular pet or breed of pet is needed. But in the light of the practical difficulties and expenses of tailoring a custom diet for a particular pet, consumers are often forced to choose among a limited variety of available mass-produced pet foods and products. With the view of fulfilling the pet owners' need for adapted food compositions, several manufacturers have conceived systems allowing delivering foodstuff that better correlates with the specific nutritional requirements of their companion animal.

US 6,669,975 is directed to a customized dietary health management system for pets. This management system includes manufacturing a dry kibble product by blending pre-made dry kibbles, adding additional functional ingredients and then packaging. A customized food product is obtained by selecting at least one formulation of pre-made dry kibble, separating a predetermined volume of the at least one formulation of the pre-made dry kibble, blending the predetermined volume of pre-made dry kibble, coating the volume of dry kibble with a selected mixture of functional ingredients and then packaging the resulting product.

WO2021061743 teaches the administration of individualized pet food products, in particular of dry pet food, through the processing of a plurality of pre-made dry compositions, of which none are nutritionally complete. The disclosed process is advantageous because it allows to personalize such animal food compositions with only a minimal amount of pre-manufactured compositions.

US 2010/0303976 A1 teaches a process for preparing coated dry kibbles with improved palatability.

WO 2015/066009 teaches a dry pet food composition including a palatability enhancing coating.

Samant et al. ("Dry Pet Food Flavor Enhancers and Their Impact on Palatability: A Review; Foods; 2021) teaches that dry pet foods (e.g. kibbles), while being popular, are the least palatable. It teaches (i) a selection of palatants, in particular flavor enhancers, meant to increase their acceptability to pets, and (ii) alternative methods of palatant applications that may impact palatability, including a two-step coating process wherein a flavorant and phosphate are applied on a pet food, followed by spraying of an acidic enhancer, and a multiple-coating technique wherein a dry pet food is coated with a primary coating comprising farinaceous and proteinaceous material, followed by a secondary coating of starch or egg.

However, those methods do not necessarily take into account the fact that the processing and preparation of food products, especially individualized animal food products, may require multiple steps of mixing base ingredients over time.

Dry base compositions thus provide the advantage of being less sensitive to oxidation or other chemical processes. Still, the processing of individualized animal food products from dry compositions is not sufficient for overcoming all those problems.

Indeed, the process of creating an animal food product, in particular a dry animal food product such as a kibble, is usually done by baking and/or extruding. The dough is typically fed into a machine called an expander and/or extruder, which uses pressurized steam or hot water to cook the ingredients. While inside the extruder, the dough is generally under extreme pressure and high temperatures. The dough is then pushed through a die (specifically sized and shaped hole) and then cut off using a knife. The puffed dough pieces are usually made into a kibble by passing it through a dryer so that moisture is dropped down to a defined target ensuring stability of the food until consumption.

The final heated product is normally not in an optimal condition to be sprayed by temperature-sensitive aromas. Overall, heating steps are thus detrimental to the quality and integrity of the palatability enhancers which may be present on a dry animal food product such as a kibble.

Also, such methods may rely on the mixing of different ingredients, depending on the individual pet profile to be considered, which can be particularly fastidious for dry and temperature-sensitive products, and which may thus have a significant impact on, both, palatability of the final product and homogeneity and stability.

There is thus a general need for providing customized animal food products, while retaining or even improving their palatability and homogeneity; and consequently, for improving methods for preparing and/or processing such products.

Consequently, there remains a need to provide an individualized animal food product and methods to produce the same.

There remains a need for methods of preparation of animal food products, including dry, semi-most and moist animal food products.

There remains a need for individualized animal food products.

The disclosure has for purpose to meet the above-mentioned needs.

## SUMMARY OF THE DISCLOSURE

A first aspect of the present disclosure relates to a method for preparing a customized food product for an animal, comprising the steps of:

a) providing a dry food composition comprising a first coating, said first coating comprising a fat-containing composition comprising between about 0.5% and about 8% of fat in dry matter (FDM) of the total weight of the fat-containing composition;
b) applying a second coating, preferably by spraying, to the dry food composition, the second coating comprising at least one food additive product;
characterized in that the second coating is applied at a temperature less than about 37° C and/or within about 10°C of the ambient temperature.

Another aspect of the present disclosure relates to a method for preparing a customized food product for an animal, comprising the steps of:

a) providing a dry food composition comprising a first coating, said first coating comprising a fat-containing composition comprising between about 0.5% and about 8% of fat in dry matter (FDM) of the total weight of the fat-containing composition;
b) applying a second coating, preferably by spraying, to the dry food composition, the second coating comprising (i) a food additive product in liquid form and (ii) a food additive product in powder form;

characterized in that the second coating is applied at a temperature less than about 37° C and/or within about 10° C of the ambient temperature.

Another aspect of the present disclosure relates to a kibble comprising a core dry food composition suitable for animal consumption, and an external coating comprising a fat-containing composition comprising at least about 0.5% of fat in dry matter (FDM) of the total weight of the fat-containing composition, and less than about 8% of FDM.

Another aspect of the present disclosure relates to a kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 8% of FDM, and
- A food additive product.

Another aspect of the present disclosure relates to a customized food product for an animal obtainable by the method according to the present disclosure, said food product being in the form of a kibble.

Another aspect of the present disclosure relates to a method for selecting and preparing a customized food product for an animal, comprising the steps of:

a) selecting at least one food additive product;
b) providing a dry food composition comprising a first coating, said first coating comprising a fat-containing composition comprising between about 0.5% and about 8% of fat in dry matter (FDM) of the total weight of the fat-containing composition;
c) applying a second coating, preferably by spraying, to the dry food composition, the second coating comprising the at least one food additive product selected in step a);
characterized in that the second coating is applied at a temperature less than about 37° C and/or within about 10° C of the ambient temperature.

Another aspect of the present disclosure relates to a method for feeding an animal, comprising a step of administering a customized food product according to the present disclosure.

## DESCRIPTION OF THE FIGURES

<u>Figure 1.</u> **General description of the production method according to the present disclosure.** A first coating step is performed on a dry food product with liquid fat, then the product is cooled down until stabilization (e.g. 2 to 3 weeks after production of the dry product). Then, in a second step, the cold dry product is sprayed with aroma liquids and palatant powders. At the end of the process, the product is directly packed.

## DETAILED DESCRIPTION OF THE DISCLOSURE

It is provided herein experimental evidence, based on pets studies, that the preparation of individualized animal food products can be improved when food additives are coated at the surface of a dry composition which was previously coated with a fat-containing composition having at least about 0.5% of fat in dry matter (FDM) of the total weight of the fat-containing composition, and at ambient or low temperature.

More particularly, it is demonstrated that the coating of such food additives can be statistically improved when the dry composition is preliminarily coated with a fat-containing composition having less than about 8% fat in dry matter (FDM) of the total weight of the fat-containing composition.

More particularly, it is demonstrated that the statistical significance of this improvement is long-lasting, for at least two-months after the preparation of said animal food products, which also can render the final prepared product distinguishable from other animal food products prepared with a different protocol.

More particularly, it is demonstrated that the final animal food products show increased palatability over time.

This improvement is also particularly advantageous and applicable in the context of an industrial process, as it allows to distinguish both the production of the dry food composition, and the additional further processing and coating steps. For example, this process of preparation is particularly advantageous in that it can allow the production of dry food compositions at a given space and time, and then the additional coating step(s) in a "cold" (or ambient temperature) environment, at a later time or localization.

This improvement is also particularly advantageous for the preparation of dry animal food products, which are known in the Art to be less palatable according to standard protocols.

This improvement is also particularly advantageous in the context of individualization of the food as it allows to manufacture a dry food and to bring the specific and selected compounds for a given animal at the last minutes or even in a different place by including these compounds within the second coating. This is of particular interest to add compounds which can be deteriorated for example within the time or even during the extrusion process. This can also be of particular interest to add specific compounds locally without the need of having these compounds available within the factory manufacturing the pet food as such second coating can be realized at any time and at any place.

In the specific context, for example, of improving the palatability of the food, this improvement allows the individualization of the palatants which can be used to comply with each animal preferences. For example, it is possible, according to the disclosure, to determine in a preliminary step the tastes, the smells or preferences of a given animal and then to individualize the food at a later time by incorporating the selected palatant(s) in the coating step.

Without wishing to be bound by the theory, the inventors are of the opinion that the coating step, according to the present disclosure, is also more homogeneous and efficient; thus leading to improved stickiness of the food additive(s) on the final product, including dry final products, even weeks after their preparation or even packaging.

A first aspect of the present disclosure thus relates to a method for preparing a customized food product for an animal, comprising the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating to the dry food composition, the second coating comprising at least one food additive product;

characterized in that the second coating is applied at a temperature less than about 37° C and/or within about 10°C of the ambient temperature.

Preferably, the at least one food additive product(s) is specific to the animal.

In an embodiment, the step b) of applying the second coating is done by spraying.

In one particular embodiment, the method for preparing a customized food product for an animal comprises a plurality of additional coating steps, the said additional coating steps comprising one or more food additive product(s).

In one particular embodiment, the present disclosure relates to a method for preparing a customized food product for an animal, comprising the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating to the dry food composition, the second coating comprising (i) a food additive product in liquid form and (ii) a food additive product in powder form;

characterized in that the second coating is applied at a temperature less than about 37° C and/or within about 10° C of the ambient temperature.

In another embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;

b) spraying a second coating to the dry food composition, the second coating comprising (i) a food additive product in liquid form and (ii) a food additive product in powder form;

characterized in that the second coating is sprayed at a temperature less than about 37° C and/or within about 10° C of the ambient temperature.

In another embodiment, the method for preparing a customized food product for an animal according to the disclosure can further comprise a step of packaging the prepared food product.

According to said particular embodiment, the method for preparing a customized food product for an animal can comprise the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating to the dry food composition, the second coating comprising at least one food additive product;

c) packaging the prepared customized food product;

characterized in that the second coating is applied at a temperature less than about 37° C and/or within about 10°C of the ambient temperature.

According to said particular embodiment, the method for preparing a customized food product for an animal can comprise the following steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating, preferably by spraying, to the dry food composition , the second coating comprising (i) a food additive product in liquid form and (ii) a food additive product in powder form;

c) packaging the prepared customized food product;

characterized in that the second coating is applied at a temperature less than about 37° C and/or within about 10° C of the ambient temperature.

In another embodiment, the step c) of packaging according to the method of the disclosure can be performed under conditions wherein the temperature of the animal food product is less than about 37° C and/or within about 10° C of the ambient temperature.

When applicable, the food additive product in liquid form and the food additive product in powder form can be the same food additive product or can be different food additive products.

In such an embodiment, at least the food additive product in powder form or the food additive product in liquid form is specific to the animal to be fed. In another embodiment, both can be specific to the animal to be fed.

According to the disclosure, the step b) of applying a second coating comprising the food additive product in liquid form, and the food additive product in powder form, can be performed in a sequential manner or simultaneously, for example as a mixture.

According to an embodiment of the disclosure, the step b) of applying a second coating comprising (i) a food additive product in liquid form and (ii) a food additive product in powder form can be performed in a single step of applying said food additive product in powder form and a said food additive product in liquid form simultaneously.

Said food additive products in powder and in liquid form can be applied simultaneously as separate compositions or can be applied simultaneously as a mixture or a premixture.

According to another embodiment of the disclosure, the step b) of applying a second coating comprising (i) a food additive product in liquid form and (ii) a food additive product in powder form can be performed in 2 sequential steps of i) applying first said food additive product in powder form and ii) applying next said additive product in liquid form.

In such an embodiment, the method for preparing a customized food product for an animal according to the disclosure can further be characterized in that only the step of applying the food additive product in liquid form is done at a temperature less than about 37° C and/or within about 10° C of the ambient temperature. In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;
b) applying a second coating, preferably by spraying, to the dry food composition, the second coating comprising (i) a food additive product in powder form and (ii) a food additive product in powder form; said second coating being performed in 2 sequential steps of i) applying first said additive product in powder form and ii) applying next said additive product in liquid form;

characterized in that the food additive product in liquid form is applied at a temperature less than about 37° C and/or within about 10° C of the ambient temperature.

In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;
b) applying a second coating, preferably by spraying, to the dry food composition, the second coating comprising (i) a food additive product in powder form and (ii) a food additive product in powder form; said second coating being performed in 2 sequential steps of i) applying first said food additive product in powder form and ii) applying next said food additive product in liquid form;
characterized in that the food additive product in powder form and the food additive product in liquid form are both applied at a temperature less than about 37° C and/or within about 10° C of the ambient temperature.

According to another embodiment of the disclosure, the step b) of applying a second coating comprising (i) a food additive product in liquid form and (ii) a food additive product in powder form is performed in 2 sequential steps of i) applying first a food additive product in liquid form and ii) applying next said food additive product in powder form.

In such an embodiment, the method for preparing a customized food product for an animal according to the disclosure can further be characterized in that only the step of applying the food additive product in powder form is done at a temperature less than about 37° C and/or within about 10° C of the ambient temperature.

In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;
b) applying a second coating, preferably by spraying, to the dry food composition, the second coating comprising (i) a food additive product in powder form and (ii) a food additive product in powder form; said second coating being performed in 2 sequential steps of i) applying first said food additive product in liquid form and ii) applying next said food additive product in powder form;

characterized in that the food additive product in powder form is applied at a temperature less than about 37° C and/or within about 10° C of the ambient temperature.

In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating, preferably by spraying, to the dry food composition, the second coating comprising (i) a food additive product in powder form and (ii) a food additive product in powder form; said second coating being performed in 2 sequential steps of i) applying first said food additive product in liquid form and ii) applying next said food additive product in powder form;

characterized in that the food additive product in powder form and the food additive product in liquid form are both applied at a temperature less than about 37° C and/or within about 10° C of the ambient temperature.

In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating, preferably by spraying, to the dry food composition, the second coating comprising a first food additive product;

c) applying a third coating, preferably by spraying, to the coated dry food composition obtained at the previous step b), the third coating comprising a second food additive product;

characterized in that the third coating is applied at a temperature less than about 37° C and/or within about 10° C of the ambient temperature.

In such an embodiment, at least one of the first or the second food additive product, or both the first and the second additive products are specific to the animal to be fed.

In such an embodiment, the method for preparing a customized food product for an animal according to the disclosure can comprise the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating, preferably by spraying, to the dry food composition, the second coating comprising a food additive product in powder form;

c) applying a third coating, preferably by spraying, to the coated dry food composition obtained at the previous step b), the third coating comprising a food additive product in liquid form;

characterized in that the third coating is applied at a temperature less than about 37° C and/or within about 10° C of the ambient temperature.

According to an embodiment of the disclosure, the dry food composition at **step a)** is characterized in that the fat-containing composition can partially cover the surface of the said dry composition.

It will, however, be readily understood that the second coating step(s) (e.g. coating with one or more food additive products as described herein) can preferably take advantage of the presence of the fat-containing composition at the surface of the dry food composition.

Hence, according to an embodiment of the disclosure, the dry food composition at **step a)** is characterized in that the fat-containing composition completely covers the surface of the said dry food composition.

The further coating step(s) as described herein can comprise or consist of a partial or complete covering on the surface of the dry food composition at **step a).**

In one example, the dry food composition can be partially covered with a coating such that only part of the dry food composition is covered, and part of the dry food composition is not covered and is thus exposed.

In another example, the dry food composition can be completely covered with a coating such that the entire dry food composition is covered and thus not exposed.

Other coatings can also be applied onto coatings such that a layering of coatings can be present on all or part of the surface of the dry food composition.

For example, the dry food composition can be completely coated with a first coating, and the first coating can be completely coated with a second coating such that the first coating and the second coating each form a separate layer.

Alternatively, the dry composition can be partially coated with a first coating, and the first coating can be partially coated with a second coating.

Additional coating, in particular a plurality of coatings, can be added, such as third, fourth, fifth, sixth, up to the desired number of coatings. In one embodiment, each can form a separate layer. In another embodiment, each can form partial layers. In one embodiment, a plurality of coatings can form a single layer, and each layer more can be formed from one or a plurality of coatings.

The present disclosure is not intended to be interpreted as limitative with regards to the number of coatings and layers which are meant to be coated at the surface of the dry food composition.

In another embodiment, the method for preparing a customized food product for an animal according to the disclosure can comprise one or more additional coating steps before or after applying the second coating comprising the food additive products in liquid and powder forms.

For example, the method according to the disclosure can comprise one or more additional coating steps before applying the second coating comprising the food additive products in liquid and powder forms.

For example, the method according to the disclosure can comprise one or more additional coating steps after applying the second coating comprising the food additive product.

In another embodiment, the method for preparing a customized food product for an animal according to the disclosure does not comprise any step of heating the dry food composition provided at **step a).**

In another embodiment, the method for preparing a customized food product for an animal according to the disclosure does not comprise any step of heating the dry food composition.

In another embodiment, the method for preparing a customized food product for an animal according to the disclosure does not comprise any step of heating the dry food composition before applying the second coating comprising the food additive product.

In another embodiment, the method for preparing a customized food product for an animal according to the disclosure does not comprise any step of heating the dry food composition above ambient temperature, or alternatively within about 10°C of the ambient temperature.

In another embodiment, the method for preparing a customized food product for an animal according to the disclosure does **not** comprise any step of heating the dry food composition at about 37°C, or above a temperature of about 37°C; which may thus be at, or above, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 71°C, 72°C, 73°C, 74°C, 75°C, 76°C, 77°C, 79°C, 80°C, 81°C, 82°C, 83°C, 84°C, 85°C, 86°C, 87°C, 88°C, 89°C, 90°C, 91°C, 92°C, 93°C, 94°C, 95°C, 96°C, 97°C, 98°C, 99°C, 100°C, 101°C, 102°C, 103°C, 104°C, 105°C, 106°C, 107°C, 108°C, 109°C, and 110°C.

In another embodiment of the method for preparing a customized food product for an animal according to the disclosure, the temperature of the provided dry food composition is less than about 37° C. According to an embodiment of the method, the temperature of the provided dry food composition is less than about 25° C.

In another embodiment, the method for preparing a customized food product for an animal according to the disclosure can comprise applying, preferentially by spraying, to the dry food composition the second coating comprising the food additive product in liquid form.

In another embodiment, the method for preparing a customized food product for an animal according to the disclosure can comprise applying, preferentially by sprinkling, to the dry food composition the second coating comprising the food additive product in powder form.

In another embodiment of the method for preparing an animal food product according to the disclosure, the food additive productcan be selected from flavours, flagrances, chemical molecules, aromas, extracts, digest, hydrolysates, protein ingredient, and carbohydrate food.

Non-volatile compounds relate to taste, (i.e. they are detected on the tongue); volatile compounds relate to aroma, and are compounds that affect the smell of the food, (i.e. compounds detected in the nose); and some compounds fall within both categories. The combination of both taste and aroma gives the food its flavour. Flavour, as used herein, therefore encompasses both the taste and aroma of a foodstuff.

In another embodiment, the food additive product according to the disclosure can be, or can comprise, one or more non-volatile compounds. In another embodiment, the food additive product can be, or can comprise, one or more volatile compound(s). In another embodiment, the food additive product can be, or can comprise, a mixture of one or more volatile compound(s) and of one or more non-volatile compound(s).

In another embodiment of the method for preparing an animal food product according to the dislcosure, the food additive product can be an olfactive product.

When applicable, the food additive product in liquid form can be the same as the food additive product in powder form.

The dry food composition is characterized by a moisture content of less than about 12% by weight, relative to its total weight.

According to some embodiments, the dry food composition is characterized by a moisture content which is less than about 12%, 11%, 10%, 9%, 8%, 7%, 6%, or less than about 5% by weight relative to the total weight of the dry food composition.

In any case, while the dry food composition which is considered in the method of preparation is - by definition - a dry product, it will be readily understood herein that the prepared animal food product according to the disclosure is not itself necessarily dry.

In some embodiments, coating of the dry food composition with a plurality of food additive products can increase the overall moisture of the animal food product at or above about 12% by weight.

In some embodiments, the prepared customized food product can be a dry, semi-moist or wet animal food product.

In another embodiment of the method according to the disclosure, the customized food product for an animal can be a dry food product.

According to said embodiment, the disclosure relates to a method for preparing a dry customized food product for an animal, comprising the steps of:

a) providing a dry food composition comprising a first coating, said first coating comprising a fat-containing composition comprising between about 0.5% and about 8% of fat in dry matter (FDM) of the total weight of the fat-containing composition;

b) applying a second coating, preferably by spraying, to the dry food composition, the second coating comprising at least one food additive product;

characterized in that the second coating is applied at a temperature less than about 37° C and/or within about 10° C of the ambient temperature.

According to said embodiment, the disclosure relates to a method for preparing a dry customized food product for an animal, comprising the steps of:

c) providing a dry food composition comprising a first coating, said first coating comprising a fat-containing composition comprising between about 0.5% and about 8% of fat in dry matter (FDM) of the total weight of the fat-containing composition;

d) applying a second coating, preferably by spraying, to the dry food composition, the second coating comprising (i) a food additive product in liquid form and (ii) a food additive product in powder form;

characterized in that the second coating is applied at a temperature less than about 37° C and/or within about 10° C of the ambient temperature.

According to said embodiments, the prepared dry customized food product can be, for example, a dry customized food product having a moisture content of less than about 12% by weight, relative to the total weight of the food composition, for example less than about 11%, 10%, 9%, 8%, 7%, 6%, or less than 5% by weight relative to the total weight of the food product.

According to an embodiment, the fat-containing composition can comprise at least about 0.5% of fat in dry matter (FDM) of the total weight of the fat-containing composition, and less than about 8%, 7%, 6%, or less than 5% of FDM of the total weight of the fat-containing composition.

According to an embodiment, the fat-containing composition can comprise at least about 1%, 2%, 3% or at least 4% of fat in dry matter (FDM) of the total weight of the fat-containing composition, and less than about 8% of FDM of the total weight of the fat-containing composition.

According to an embodiment, the fat-containing composition can comprise at least about 1% of fat in dry matter (FDM) of the total weight of the fat-containing composition, and less than about 5% of FDM of the total weight of the fat-containing composition.

According to an embodiment, the fat-containing composition can comprise one or more fat component selected from poultry fat, chicken fat, turkey fat, pork fat, lard, tallow, beef fat, rind fat, vegetable oils, corn oil, soy oil, cottonseed oil, palm oil, algae oil, copra, insect oil, ostrich, palm kernel oil, linseed oil, canola oil, rapeseed oil, fish oil, menhaden oil, anchovy oil, and/or olestra.

According to an embodiment, the fat-containing composition can comprise one or more fat component selected from rind fat, pork fat, poultry fat and lard fat.

For example, and without limitation, dry food compositions and customized food products according to the present disclosure can include particulates; pellets; pieces of pet food, dehydrated meat, meat analog, vegetables, and combinations thereof; and pet snacks, such as meat or vegetable jerky, rawhide, and biscuits.

According to an embodiment of the disclosure, the dry food composition can be in the form of a kibble.

According to another non-mutually exclusive, embodiment, the dry food composition can comprise a core and a coating.

According to an embodiment of the disclosure, the dry food composition can comprise of a pre-coated kibble comprising a core and a first coating ; for example from 85% to 99% core in weight and from 1% to 15% coating in weight, for example from 92% to 98% core and from 2% to 8% coating.

In one embodiment, the prepared customized food product can consist of a coated kibble comprising a dry food composition and a second coating ; for example from 80% to 97% dry food composition in weight and from 3% to 20% second coating in weight, for example from 90% to 95% dry food composition and from 5% to 10% second coating.

According to an embodiment of the disclosure, the core can comprise from about 45% to about 55% carbohydrate source, from about 35% to about 45% protein source, from about 0.1% to about 5% fat source, and from about 5% to about 10% other ingredients. The coating can comprise from about 65% to about 75% protein component, a non-limiting example of which can be chicken by-product meal, from about 5% to about 10% binder component, a non-limiting example of which can be egg white, high lactose whey by-product, whey protein isolate or chicken broth, from about 0.5% to about 10% fat component, a non-limiting example of which can be chicken fat, and from about 1% to about 10% palatant component, a non-limiting example of which can be chicken liver digest. According to said embodiment, the coated kibble can be the prepared dry animal food product.

According to an embodiment, the dry food compositions and prepared customized food products according to the disclosure can be nutritionally complete.

A **second** aspect of the present disclosure relates to a kibble comprising a core dry food composition suitable for animal consumption, and an external coating comprising a fat-containing composition comprising at least about 0.5% of fat in dry matter (FDM) of the total weight of the fat-containing composition, and less than about 8% of FDM.

A **third** aspect of the present disclosure relates to a kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 8% of FDM;
- A food additive product.

In particular, the present disclosure relates to a kit, as defined above, comprising a plurality of food additive products, wherein at least one of said food additive product is preferably specific to the animal.

In particular, the present disclosure relates to a kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 8% of FDM,
- A food additive product in powder form, and
- A food additive product in liquid form.

In such an embodiment, at least the food additive product in powder or the food additive product in liquid is specific to the animal to be fed. In another embodiment, both can be specific to the animal to be fed.

A **fourth** aspect of the present disclosure relates to a customized food product for an animal obtainable by the method according to the present disclosure, said customized food product being in the form of a kibble. Another aspect of the present disclosure relates to a customized food product for an animal obtained by the method according to the present disclosure, said customized food product being in the form of a kibble.

According to another embodiment, the present disclosure relates to a customized food product for an animal comprising an external coating comprising at least i) a fat-containing composition comprising at least about 0.5% of fat in dry matter (FDM) of the total weight of the fat-containing composition, and less than about 8% of FDM, ii) a food additive product in powder form, and iii) a food additive product in liquid form.

According to an embodiment, the customized food product comprising the external coating is a dry food product.

According to an embodiment, the customized food product for an animal comprising the external coating is characterized in that it comprises:

- A first coating comprising the fat-containing composition;
- A second coating comprising at least one food additive product specific to the animal.

According to an embodiment, the customized food product for an animal comprising the external coating is characterized in that it comprises:

- A first coating comprising the fat-containing composition;
- A second coating comprising a food additive product in powder form and a food additive product in liquid form, wherein at least one of the food additive products is specific to the animal to be fed.

According to an embodiment, the customized food product for an animal comprising the external coating is characterized in that it comprises:

- A first coating comprising the fat-containing composition;
- A second coating comprising a food additive product in powder form;
- A third coating comprising a food additive product in liquid form.

In such an embodiment, at least the food additive product in powder or the food additive product in liquid is specific to the animal to be fed. In another embodiment, both can be specific to the animal to be fed.

According to an embodiment, the customized food product comprising the external coating is characterized in that it comprises:

- A first coating comprising the fat-containing composition;
- A second coating comprising the food additive product in liquid form;
- A third coating comprising the food additive product in powder form.

In such an embodiment, at least the food additive product in powder or the food additive product in liquid is specific to the animal to be fed. In another embodiment, both can be specific to the animal to be fed.

A **fifth** aspect of the present disclosure relates to a method for selecting and preparing a customized food product for an animal, comprising the steps of:

a) selecting at least one food additive product;

b) providing a dry food composition comprising a first coating, said first coating comprising a fat-containing composition comprising between about 0.5% and about 8% of fat in dry matter (FDM) of the total weight of the fat-containing composition;

c) applying a second coating, preferably by spraying, to the dry food composition, the second coating comprising the at least one food additive product selected in step a);

characterized in that the second coating is applied at a temperature less than about 37° C and/or within about 10° C of the ambient temperature.

In an embodiment, the selection step a) can be done by any method, device or more generally mean known by the person skilled in the art. As non-limitative example, this selection or screening can be realized by using a device such as the one disclosed, without limitation, in the patent application WO2021/087309 filed by the applicant (incorporated herein by reference).

In another embodiment, the selection step a) can be done by a health practitioner, such as a veterinarian, in order to customized the food composition with specific food additive(s) having or bringing a beneficial impact on the health of the animal to be fed.

A **sixth** aspect of the present disclosure relates to a method for feeding an animal, comprising a step of administering to said animal a customized food product according to the present disclosure.

## Definitions

The terms used in the present description generally have their ordinary meaning in this field, in the context of the disclosure and in the specific context in which each term is used. Certain terms are defined below in order to provide additional information for describing the compositions and the methods of the present description and the manner of manufacture and use thereof.

As used in the description and the accompanying claims, the singular forms "a", "the" include the plural unless the context clearly stipulates the contrary. Thus, for example, reference to "a compound" includes mixtures of compounds.

The terms "about" or "approximately" signify that the particular value, determined by ordinary skill in the art, is within an acceptable range of error, which will partly depend on the manner in which the value is measured or determined, i.e., the limits of the system of measurement. For example, "about" may signify in a range of three or more than three standard deviations, depending on the practice in the field in question. Alternatively, "about" may signify a range of about 10% of a given value. Furthermore, in particular with regard to systems or processes, the term may signify an order of magnitude preferably of five times, and more preferably two times, a value.

As used herein, the terms "companion animal" or "pet" mean a domestic animal including, but not limited to domestic dogs, cats, horses, cows, ferrets, rabbits, pigs, rats, mice, gerbils, hamsters, horses, and the like. Domestic dogs and cats are particular examples of pets.

As used herein, the terms "feed/food for an animal", "feed/food compositions", "feed/food kibble", "pet food", or "pet food composition" all mean a composition intended for ingestion by a pet. Pet foods can include, without limitation, nutritionally complete compositions suitable for daily feed, such as kibbles, as well as supplements and/or treats, which can or not be nutritionally balanced.

As used herein, the terms "customized feed/food" or "individualized feed/food" related to any feed/food which is totally or partially tailored for each user individually to achieve a lasting dietary change in behavior that is beneficial for health. The customization or individualization can be generally done based on several criteria specific to the user such as needs, preferences, habits, medical and activity profiles, constraints, eating habits, culinary preferences or any specific recommendations.

As used in the present description, the terms "comprise", "comprising" or any other variant of these terms, are intended to cover a nonexclusive inclusion, so that a method, a composition or a material that comprises a list of elements does not comprise only these elements but may include other elements that are not expressly enumerated or inherent in this method, this composition or this material.

As used herein, the term "nutritionally complete" means that the composition, such as pet food, has known required nutrients to sustain life in proper amounts and proportion based on recommendations of recognized authorities, including governmental agencies, such as, but not limited to, Unites States Food and Drug Administration's Center for Veterinarian Medicine, the American Feed Control Officials Incorporated, in the field of pet nutrition, except for the additional need for water

As used herein, the term "coating" means a partial or complete covering of the pre-made dry food composition, e.g. for pre-made dry food compositions in the form of a kibble, that covers at least a portion of a surface, for example on the surface of a pre-made dry food compositions characterized by the presence of a core and a shell at least partially covering said core. In one example, a core may be partially covered with a coating such that only part of the core is covered, and part of the core is not covered and is thus exposed. In another example, the core may be completely covered with a coating such that the entire core is covered and thus not exposed. Therefore, a coating may cover from a negligible amount up to the entire surface. A coating can also be coated onto other coatings such that a layering of coatings can be present. For example, a core can be completed coated with coating A, and coating A can be completely coated with coating B, such that coating A and coating B each form a layer.

As used herein, the term "core", or "core matrix", means the particulate pellet of a kibble and is typically formed from a core matrix of ingredients and has a moisture, or water, content of less than about 12% by weight. The particulate pellet may be coated to form a coating on a core, which may be a coated kibble. The core may be without a coating or may be with a partial coating. Pre-made dry food compositions, for example kibbles and/or core matrices of a kibble, can comprise farinaceous material, proteinaceous material, and mixtures and combinations thereof. For example, the core can comprise a core matrix of protein, carbohydrate, and fat.

As used herein, the terms *"food", "diet"* or *"foodstuff"* designate a material containing protein, carbohydrate and/or fat, which is used in the body of an organism to sustain growth, repair and vital processes and to furnish energy. Foods may also contain supplementary substances or additives, for example, minerals, vitamins and condiments (See Merriam-Webster's Collegiate Dictionary, 10th Edition, 1993).

As used herein, the terms "food additive", or "food supplement", shall be interpreted in its broadest sense and in a non-limitative manner such as all types of substances that are added intentionally to foodstuffs to produce specific desirable effects.

In an embodiment, such food additive products can improve the safety, the freshness, the taste, the palatability, the texture, or the appearance of the food. As non-limitative example, such food additives can be selected from processing agents (such as for example acids, acidity regulators, amino-acids, anticaking agents, antifoaming agents, bleaching agents, bulking agents, chelating agents, emulsifiers, flour treatment agents, gazing agents, humectants, pH control gents, tracer gas, thickeners, stabilizers), preservatives (such as for example antioxidants and antimicrobials), sensory agents (such as for example, colorants, color retention agents, flavors, palatability enhancers, sweeteners) and mixtures thereof.

In another embodiment, such food additive products can improve the nutritive characteristics of the food such as, for example, restoring nutrients lost or degraded during production, fortifying or enriching certain foods in order to correct dietary deficiencies, adding nutrients to food substitutes, treating or preventing pathological conditions or more generally bringing any health benefits. As non-limitative example, such food additives can be selected from antibiotics, botanicals, drugs, probiotics, prebiotics, vitamins, minerals, proteins, protein hydrolysates, immunoglobulins, essential fatty acid, any active compounds cocktails and mixtures thereof.

In a preferred embodiment, such food additive products can be selected from palatability enhancers, antibiotics, botanicals, probiotics, prebiotics, vitamins, minerals, proteins, protein hydrolysates or a mixture thereof. Antibiotics can be selected from, without limitation, Amoxicillin/Clavulanate, Gentamicin, Chloramphenicol, Sulfamethoxole, Tetracycline, Cephalexin, Clindamycin, Enrofloxacin, Metronidazole, and combinations thereof.

Botanicals can be selected from, without limitation, florals, essential oils, herbs, roots and barks, spices, fruits and vegetables, bitter, teas, such as curcumin, aloe vera, green tea, Lycopene, beta-carotene, Yucca, and combinations thereof.

Probiotics can be selected from, without limitation, Lactobacillus, Bifidobacterium, Saccharomyces, Streptococcus, Enterococcus, Escherichia, Bacillus, and combinations thereof.

Prebiotics can be selected from, without limitation, fructo-oligosaccharides (FOS), manno-oligosaccharides (MOS), xylo-oligosaccharides (XOS), Beta glucan, and combinations thereof.

Essential fatty acid can be selected from, without limitation, eicosapentaenoic acid (EPA), docosahexanoic acid (DHA), and combinations thereof.

Minerals can be selected from, without limitation, Calcium, Phosphorus, Potassium, Sodium, Chloride, Magnesium, iron, manganese, copper, and combinations thereof.

Vitamins can be selected from, without limitation, Vitamin A, Vitamin C, Vitamin D, Vitamin E, Thiamine, Riboflavin, Pantothenic acid, Vitamin B6 (Pyridoxine), Vitamin B 12, Niacin, Folic acid, Choline, and combinations thereof.

As used herein, the terms "palatability" or "palatable" refer to being desirable to the palate or taste. Further, the terms "palatability" or "palatable" as used herein refer to the extent to which an animal food product, in particular a pet food product, appeals to the palate or taste of the animal. This is suitable measured by feeding tests, e.g., difference tests or ranking tests. In certain embodiments, "palatability" can mean a relative preference for one food product over another. For example, when an animal shows a preference for one of two or more food products, the preferred food product is more "palatable", and has "enhanced palatability" or "increased palatability". In certain embodiments, the relative palatability of one food product compared to one or more other food products can be determined, for example, in side-by-side, free-choice comparisons, e.g., by relative consumption of the food products, or other appropriate measures of preference indicative of palatability

The term *"palatability enhancer"* encompasses *"olfactive products"* and *"tastants".*

The terms *"tastant"* and *"olfactive product"* include any compound, composition, formulation, or other material useful for enhancing the attractiveness and palatability of a comestible composition such as a food composition, supplement, medicament, or the like. Thus, such olfactive product may contribute to initial appeal, continued consumption, or repeated presentation aspects of palatability, or any combination thereof. Such product can include liquid and/or powder palatants.

Tastants relate to those compound(s), composition(s), formulation(s), or other material, which can produce a taste sensation by activating taste receptor cells(TRCs), which may thus comprise one or more of the five basic tastes (sweet, bitter, umami sour and salty). Such tastants can be organic or inorganic and are generally water-soluble.

In an embodiment, the food additive product can be a tastant compound selected from proline, hydroxyproline, glutamic acid, aspartic acid, arginine, cystine, glutamine, isoleucine, lysine, threonine, histidine, alanine, glycine, valine, ornithine, adenosine monophosphate (AMP), guanosine monophosphate (GMP), inosine monophosphate (IMP), uridine monophosphate (UMP), cytidine monophosphate (CMP), xanthosine monophosphate (XM), and a mixture thereof.

Olfactive products can encompass flavors, chemical molecules, aromas, extracts (*e.g.* yeast), digests, hydrolysates (*e.g.* poultry liver), protein ingredients (*e.g.,* poultry meal), carbohydrate food (*e.g.* rice flour), powders and the like. For example, the olfactive product can include fragrances such as food fragrances, odour masking agents and mixtures thereof, such as flavor compound as well as precursors for the above.

Most preferably, the term *"olfactive product"* relates those compound(s), composition(s), formulation(s), or other material, which can provide an odour or smell at room temperature.

In an embodiment, the *"olfactive product"* refers to an odour product which can be presented in a liquid, jelly, foam, oily, gel, solid form, aromatic cocktail, patch, powder, alcohol, fat, tabs or any other suitable presentation. In some embodiments, the olfactive product can be in a liquid form such as in the form of a solution or of a suspension. In some other embodiments, the olfactive product can consist of a solid form, such as a powder form.

According to an embodiment of the disclosure, the palatability enhancer (e.g. the olfactive product) can be, without limitation, a liquid, a paste, a powder, an encapsulated substance, a scratch and sniff pad, or any other equivalents.

One can also mention that the skilled person in the art can find listings of active ingredients usable for olfactive products suitable for carrying out the present disclosure from databases provided by various professional petfood associations, such as AAFCO (Association of American feed control official) or the FEDIAF (The European Pet Food Industry).

In another embodiment, the food additive product can be an olfactive product selected from acetic acid, propanoic acid, butyric acid, 3-methylbutyric acid, hexanoic acid, citric acid, tartaric acid, fumaric acid, lactic acid, hexamic acid, butyl hexanoate, heptyl formate, ethyl decanoate, ethyl caprylate, acetaldehyde, 3-methyl butanal, pentanal, heptanal, octanal, benzaldehyde, anisole, pentanol, 2-ethyl hexanol, 2,3-butanediol, thymol, carvacrol, 1,5-octadien-3-ol, acetone, 2,3-pentanedione, 2-piperidione, 2-heptanone, 1,5-octadien-3-one, ethyl vanillin, vanillin, pyrazine, methyl pyrazine, methyl pyrazine, 2,5-dimethylpyrazine, 2,6-dimethylpyrazine, 2-methyl-6-(methio)-pyrazine, 2-ethyl-3,5-dimethylpyrazine, 2-ethyl-5-methyl pyrazine, 2-ethyl-6-methylpyrazine, ethyl pyrazine, 2-pentyl furan, 2-ethylfuran, 2,5-dimethylfuran, 2-[(methyldithio)methyl]-furan, 2-(2-propenyl)-furan, 2-furanmethanol, 4-hydroxy-3(2H)-furanone and alkyl-substituted 4-hydroxy-3(2H)-furanone compounds, indole, furfural, sulphurol, 2-acetylpyridine, 2,3-dihydrothiophene, 2-methyl thiophene, 3-methyl thiophene, 2,5-dimethyl thiophene, dihydro-2-methyl-3(2H)- thiophene, benzo[b]thiophene-4-ol, 5-methyl-2-thiophenecarboxaldehyde, methyl ethyl disulfide, dimethyl trisulfide, methyl-2-methyl-3-furyl disulfide, 2-methyl-1-ethyl pyrrolidine, 2-acetylthiazole, 4-methylthiazole, 2-ethylthiazole, theanine, glutamine, tea, 2-methyl-3-furanthiol, 2-furanmethanethiol, 3-mercapto-2-pentanone, ethyl furanone, 2,4-decadienal, 2,3-butanedione, di-(2-methyl-3-furyl)-disulfide, and a mixture thereof.

In another embodiment, the food additive product can comprise a live microorganism, or fraction thereof.

According to an embodiment of the disclosure, the olfactive product can be selected from flavours, flagrances, chemical molecules, aromas, extracts, digest, hydrolysates, protein ingredient, carbohydrate food or powder or any aromatic ingredient known by the person skilled in the art.

According to an embodiment of the disclosure, an olfactive product can have an odour or smell of or resembling one or more of meat, poultry, fish, marine organism, mollusc, crustacean, cheese, bacon, butter, cream, game, gravy, rabbit, turkey, fowl, rodent, mouse, bird, plant, yeast, seafood and/or extracts of any one or more of these.

According to an embodiment of the disclosure, an olfactive product can include an olfactive compound, as previously defined, formulated with at least one formulating ingredient to confer an appropriate consistence: liquid, solid, powder-like or pasty-like. Appropriate formulating ingredients can be water, oil, flour, starch, or carbohydrate such as maltodextrin.

An olfactive product can include at least one olfactive compound as previously defined; or alternatively more than one (a "plurality") olfactive compound.

A tastant product can include at least one tastant compound as previously defined; or alternatively more than one (a "plurality") tastant compound.

A palatability enhancer can include at least one olfactive compound as previously defined and at least one tastant product as previously defined.

A palatability enhancer can include a plurality of olfactive compounds as previously defined and a plurality of tastant products as previously defined.

According to an embodiment of the disclosure, an olfactive product can include as sole olfactive compound a compound selected in the above-defined list of olfactive products, or a mixture thereof.

According to an embodiment of the disclosure, a tastant product can include, as sole tastant, a compound selected in the above-defined list of tastant products, or a mixture thereof.

Examples of such palatability enhancers which are available in liquid form can comprise: acetic acid; propanoic acid; butyric acid; 3-methylbutyric acid; hexanoic acid; citric acid; tartaric acid; fumaric acid; lactic acid; hexamic acid; acetaldehyde; 3-methyl butanal; pentanal; heptanal; octanal; benzaldehyde, pentanol; 2-ethyl hexanol; 2,3-butanediol, 1,5-octadien-3-ol; acetone, furfural, 2-methyl-3-furanthiol, 2-furanmethanethiol, 3-mercapto-2-pentanone, ethyl furanone, 2,4-decadienal, 2,3-butanedione, di-(2-methyl-3-furyl)-disulfide, butanone, 2-heptanone; 1,5-octadien-3-one, 2-pentyl furan, 2-ethylfuran, 2,5-dimethylfuran; 2-[(methyldithio)methyl]-furan; 2-(2-propenyl)-furan, furanmethanol, thymol, carvacrol, 2,3-pentanedione, 4-hydroxy-3(2H)-furanone, 2,5-dimethylpyrazine; ethyl pyrazine, methyl ethyl disulfide; dimethyl trisulfide; methyl-2-methyl-3-furyl disulfide, 2-acetylthiazole.

In an embodiment of the disclosure, such palatability enhancers can comprise water, hydrolysate and oil blend. By the expression "hydrolysates", it must be understood any chemically heterogeneous mixture comprising polypeptides and free amino acids wherein at least 85% of the amino acid content is comprised of oligopeptide chains, polypeptide chains (less than 18 kD), and free amino acids.

Examples of palatability enhancers which are available in powder form can comprise: Proline, Hydroxyproline, glutamic acid, aspartic acid, arginine, cystine, glutamine, isoleucine, lysine, Threonine, histidine, alanine, glycine, valine and ornithine, adenosine monophosphate (AMP), guanosine monophosphate (GMP), inosine monophosphate (IMP), uridine monophosphate (UMP), cytidine monophosphate (CMP), xanthosine monophosphate (XMP), Anisole, ethyl vanillin; vanillin, indole, pyrazine, 2-methyl thiophene, 2,6-dimethylpyrazine, Theanine.

According to an embodiment of the disclosure, the food additive product can include a mixture of the above listed compounds, in particular a mixture comprising 2, 3, 4, 5, 6 or more, up to 11, 12, 13, 14 or 15 of any of the above listed compounds

As used herein, the term "wet food" or "wet food composition" generally refers to a food composition having a moisture content of 30% or more, or more than 40% by weight, relative to the total weight of the food composition. Preferably, the wet food composition has a moisture content lower than 90% by weight, relative to the total weight of the food composition. In general, it is the final product of a process comprising a final step of sterilization (instead of a drying step). For example, the wet food consists of a chunk form, more particularly of chunks in gravy form. For example, the wet food consists of chunks and gravy, chunks in jelly, loaf, mousse, terrine, bites form. "Chunks and gravy" products include a preformed meat particle prepared by making a meat emulsion and by putting this meat emulsion through a muzzle under pressure and then cooked. A product, such as cooked meat, is diced into chunks, which are eventually mixed with a gravy or sauce. The two components are then filled into a container, usually a can or pouch, which is seamed or sealed and sterilized. As opposed to the ground loaf, chunk and gravy compositions have physically separated, discrete chunks (*i.e.* pieces of ground meat and grains) as prepared. These discrete particles are present in the gravy-type liquid in the final container. When serving, chunk and gravy products flow out of the can and can be easily mixed with other dry products. While the chunk and gravy products allow better integrity of the individual ingredients, the heterogeneous formulation of the chunk and gravy products are sometimes disfavored by consumers. Wet food compositions are generally packaged in can-like containers and are considered "wet" in appearance because of the moisture contained therein. Two types of wet compositions are generally known in the art. The first is known in the art as "ground loaf." Loaf products are typically prepared by contacting a mixture of components under heat to produce an essentially homogeneous, intracellular honeycomb-type mass or "ground loaf." The ground loaf mass is then packaged into a cylindrical container, such as a can. Upon packing, ground loaf assumes the shape of the container such that the ground loaf must be cut when serving to a companion animal. The wet food composition is preferably packaged. In this way, the consumer is able to identify, from the packaging, the ingredients in the food product and confirm that it is suitable for the particular pet in question. The packaging can be metal, plastic, paper or card.

As used herein, the term "semi-moist food" or "semi-moist food composition" generally refers to a food composition with an intermediate moisture content of about 12% to about 30% in weight, relative to the total weight of the food composition. Hence, such semi-moist food composition is generally the final product of a process allowing a moisture content value that is intermediate between a dry food and a wet food. In some embodiments, the said process can comprise a step of adding a humectant agent. In some embodiments, the said process comprises an extrusion step and a subsequent treatment step with Super-Heated Steam (SHS). In some embodiments, the semi-moist food according to the present disclosure containing more than 12% and at most 30% moisture by weight, relative to the total weight of the food composition. Illustratively, a semi-moist food composition has 11% to 25% moisture by weight, relative to the total weight of the food composition, and/or a water activity of 0.64 to 0.75, preferably both.

As used herein, the term "dry food" or "dry food composition" generally refers to a food or composition having a moisture content of less than 12% by weight, relative to the total weight of the food composition, and commonly even less than 7% by weight, relative to the total weight of the food composition. In preferred embodiments of the present disclosure, dry food according to the present disclosure has a moisture content up to 12% by weight, relative to the total weight of the considered composition and/or food product. This can include all subranges, such as for example up to 12%, 11%, 10%, 9%, 8%, 7%, 6% and 5%. In some embodiments, the said dry food has a moisture content of 7% or less, such as 5% by weight, relative to the total weight of the composition. In preferred embodiments, the dry food has a moisture content of more than 3% by weight, relative to the total weight of the food composition.

In a non-exhaustive manner, a dry food composition can be manufactured by mixing together ingredients and kneading in order to make consistent dough that can be cooked.

As used herein, and in the absence of any other indication, the terms *"heating"* or *"heating step"* generally refer to any heating protocol leading to an increase of temperature of the food product or composition, or alternatively of maintaining the temperature of the food product or composition, above a reference temperature, such as ambient temperature.

In the absence of any other indication, the term *"ambient temperature"* refers to the tempreature at which the dry food composition is provided. An "ambient temperature" is typically a temperature ranging from about 15 to about 25° C. Accordingly, and in the context of a method of preparation of animal food products according to the disclosure, it will be readily understood that the term can vary depending on the localization of the preparation.

As used herein, the term *"fat"* encompasses any food-acceptable fat(s) and/or oil (s) irrespective of their consistency at room temperature, i.e. irrespective of whether said "fat" is present in essentially fluid form or in essentially solid form. The fat-containing composition according to the disclosure can comprise fat of animal and/or vegetable origin. Fat can be supplied by any of a variety of sources known by those skilled in the art. Plant fat sources can include, without limitation, wheat, sunflower, safflower, rapeseed, olive, borage, flaxseed, peanuts, blackcurrant seed, cottonseed, wheat, germ, corn germ, algae oil as well as oils derived from these and other plant fat sources. Animal sources include, for example and without limitation, chicken fat, turkey fat, beef fat, duck fat, pork fat, lamb fat, etc., fish oil, krill oil or any meat, meat by-products, seafood, dairy, eggs, etc. Fat content of foods can be determined by any number of methods known by those of skill in the art. A fat source can comprise, or even consist essentially of a mixture of fatty acids.

As used herein, the term "fat composition" or « fat-containing composition » means any composition which comprise at least a lipid, in particular at least one fatty acid.

As used herein, the terms "fat", "oil", and "lipid" are synonymous and encompass also mixtures of fats or oils. Animal fats as well as vegetable oils and/or marine oils can be used. Any commercially-available source of animal, vegetable, marine fat can be tested. Plant oils are typically canola oil, soybean oil, corn oil, olive oil, sunflower oil, linseed oil, peanut oil, palm oil, palm kernel oil, safflower oil, rapeseed oil, cottonseed oil, coconut oil, and the like. Typical animal fats are beef fat (including beef tallow), pork fat (including pork lard), poultry fat (including chicken fat, turkey fat, duck fat, and combinations thereof), and the like. Marine oils are typically tuna oil, sardine oil, salmon oil, menhaden oil, anchovy oil, fish oil, and the like. Also are encompassed herein fats that are derived from animal, plant, marine sources, or that are produced by animals and plants.

Fatty acids which can considered as part of the « fat-containing composition » can include essential fatty acids (EFAs), non-essential fatty acids, and/or those susceptible to be found in nature, including fatty acids, saturated or unsaturated, having from about 10 or more carbons, such as about 10 to about 20 carbons. Examples of such fatty acids include omega-8, omega-6 and omega-3 fatty acids, capric acid, lauric acid, myristic acid, palmitic acid, and stearic acid, as well as oleic, linoleic, and linolenic acids, arachidic and arachidonic acid, and/or other long chain polyunsaturated fatty acid having a carbon chain length of at least about 18, most commonly about 18 to about 22, carbon atoms and a minimum of 2 olefinic double bonds in the carbon chain.

Fatty acids, according to the present disclosure, can comprise or consist of isolated fatty acids or mixtures of fatty acids.

For example mixtures of different fatty acids, can be those selected from oleic acid, palmitic acid, linoleic acid, stearic acid, and/or linolenic acid.

For example a fat-containing composition according to the present disclosure, comprising at least about 0.5% of fat in dry matter (FDM) of the total weight of the fat-containing composition, can be further characterized in that the said fat comprises or consists of fatty acids or mixture of at least two fatty acids, which can for example differ in a characteristic that is one or more of (i) length of the aliphatic tail, (ii) the position of one or more double bonds between carbon atoms, if any such bonds are present in the fatty acid, and (iii) the configuration of the two carbon atoms that are bound next to either side of the double bond.

## EXAMPLES

### Example 1. Methodology for establishing palatability for cats

A palatability test is carried out on a panel of a plurality (40) of adult cats, males and females, of various breeds. The Versus Methodology was used. It consists in presenting simultaneously two blows to each cat.

The test was performed over two meals. Both diets were swapped between meal 1 and meal 2, in order to avoid potential bias related to bowl position.

The measured critera for cat were:

- **1st choice:** first food consumed by the animal.
- **Intake ratio** for each product.
- **Preferred:** preferred food for the animal.

The measured critera for dogs were:

- **1st choice:** first food consumed by the animal.
- **1st bowl finished:** product for which the bowl is finished firs.
- **Preferred:** preferred food for the animal.

Food preparation is done 1 hour before the test starts. The same amount of food is distributed in each bowl, after weighting. Quantity is calculated according to the individual characteristics of each animal. The test consists in individual long meals, starting at 4:00 pm and ending at 7:00 am on the next morning.

Palatability tests were achieved at the kennel & cattery to assess the performance between: (i) a standard dry product coating, and (ii) an animal food product coated in two-steps, according to the disclosure (elsewhere reported as *"last minute coating"*), including a first coating step with fat, and then three weeks or two months later, a second coating step with aromas in liquid and powder form, as shown in **figure 1.**

For each product (i.e. the control or standard dry product coating vs. the two-step "last minute" coating), the expected benefits include freshness, homogeneity and precision. For each product, the same aroma batches were used.

For the purpose of this experiment, low fat coatings were defined as fat-containing compositions comprising about 3% of fat in dry matter (FDM) of the total weight of the fat-containing composition. Standard fat coatings were defined as fat-containing compositions comprising about 6% of fat in dry matter (FDM) of the total weight of the fat-containing composition. The fat-containing composition is produced from poultry.

Statistical analysis of the **consumption ratio** was achieved for quantitative data and dependent samples with a Student test. In palatability tests, the consumption ratio of food A depends on the consumption ratio of food B:

Step 1: For each animal, calculation of: D = Ratio A - Ratio B
Step 2: Calculation of the Student variable, taking into account:

- Each D of the animals
- The difference between each D and the average of all D
- The total number of animals

-

$$z = \frac{\bar{X}_D}{S_D\sqrt{N}}$$

Step 3: Search for the associated p-value, thans to the Student Table. In the Student Table, each Student variable corresponds to a specific p-value. Significant results are defined as $p < 0.05$ & highly significant results are defined as $p < 0.01$.

In appetence tests, the **preferred** animal food product is determined by calculating the significance of the difference beween food A and B. Data were collected over 16h. The T°c of each meal is comparable. Only animals eating more than 5g/meal on all meals are included in the analysis.

The Chi-square test is used for qualitative data. In appetence tests, the **first choices** offer two possible answers: food A or food B. The sum of the animals having chosen A or B is determined, and compared to the expected results if no differences are to be found. The signficance theresholds are the same as for Student.

Significant or highly significant differences were observed at T + 2 months for low and standard fat-containing compositions coated with the protocol of the disclosure vs. the control protocol, on, respectively, the following parameters: **preferred** and **ratio.**

Accordingly, the experimental data demonstrate that the two-steps coating process is not detrimental for the palatability of the final product in the long term in the cat population. The two-steps process further demonstrates final animal food products with improved palatability over the control food products, when the amount of fat in the fat-containing composition is lowered.

### Example 2. Methodology for establishing palatability for dogs & mini dogs

The same method was used for establishing palatability for dogs, with regards to the coating process of the disclosure.

For the purpose of this experiment, low fat coatings were defined as fat-containing compositions comprising about 3% of fat in dry matter (FDM) of the total weight of the fat-containing composition. Standard fat coatings were defined as fat-containing compositions comprising about 8% of fat in dry matter (FDM) of the total weight of the fat-containing composition. The fat-containing composition is produced from pork.**)**

Significant or highly significant differences were observed over a long period after preparation, at T + 2 weeks and T + 2 months for low fat-containing compositions on **preferred** and **ratio** parameters.

In view of the above, the improved palatability previously observed for cats (see example 1) is also found in the dog and mini dog population.

### Example 3. Formulation of a final kibble composition after 2-step protocol.

| Name | Poultry Fat (%) | Palatant liquid (%) | Palatant powder (%) |
|---|---|---|---|
| **Composition 1 (cats)** | 3 | 3 | 2 |
| | 3 | 3 | 2.3 |
| | 6 | 3 | 2 |
| **Composition 2 (dogs)** | 3 | 3.3 | 0.7 |
| | 3 | 3.3 | 0.9 |
| | 8 | 3.3 | 0.7 |

**Claims**

1. A method for preparing a customized food product for an animal, comprising the steps of:

   a) providing a dry food composition comprising a first coating, said first coating comprising a fat-containing composition comprising between about 0.5% and about 8% of fat in dry matter (FDM) of the total weight of the fat-containing composition;

b) applying a second coating to the dry food composition, the second coating comprising at least one food additive product;

**characterized in that** the second coating is applied at a temperature less than about 37° C and/or within about 10°C of the ambient temperature.

2. The method according to claim 1, wherein the step b) of applying the second coating is done by spraying.

3. The method according to any one of the preceding claims, which further comprises a step of packaging the prepared customized food product.

4. The method according to any one of the preceding claims, wherein the fat-containing composition comprises less than about 5% of fat in dry matter (FDM) of the total weight of the fat-containing composition.

5. The method according to any one of the preceding claims, wherein the food additive product is selected from acids, acidity regulators, amino-acids, anticaking agents, antifoaming agents, bleaching agents, bulking agents, chelating agents, emulsifiers, flour treatment agents, glazing agents, humectants, pH control gents, tracer gas, thickeners, stabilizers, antioxidants and antimicrobials, colorants, color retention agents, flavors, palatability enhancers, sweeteners, antibiotics, botanicals, drugs, probiotics, prebiotics, vitamins, minerals, essential fatty acid, any active compounds cocktails and mixtures thereof..

6. The method according to any one of the preceding claims, which comprises the steps of:

   a) providing a dry food composition comprising a first coating, said first coating comprising a fat-containing composition comprising between about 0.5% and about 8% of fat in dry matter (FDM) of the total weight of the fat-containing composition;

   b) applying a second coating, preferably by spraying, to the dry food composition, the second coating comprising at least one food additive product in powder and/or liquid form.

7. The method according to any one of the preceding claims, which does not comprise a step of heating the dry food composition.

8. The method according to any one of the preceding claims, wherein the temperature of the dry food composition does not exceed about 25° C.

9. The method according to any one of the preceding claims, comprising spraying the dry food composition with an olfactive product in liquid form.

10. The method according to any one of the preceding claims, wherein the fat-containing composition comprises between about 1% and about 5% of fat in dry matter (FDM) of the total weight of the fat-containing composition.

11. The method according to any one of the preceding claims, wherein the dry food composition is in the form of a kibble.

12. A kibble comprising a core dry food composition suitable for animal consumption, and an external coating consisting of a fat-containing composition comprising between about 0.5% and about 8% of fat in dry matter (FDM) of the total weight of the fat-containing composition.

13. A kit comprising:

   - A kibble according to the preceding claim,
   - At least one food additive product.

14. A customized food product for an animal obtained by the method according to any one of claims 1 to 11, said customized food product being in the form of a kibble.

15. A method for feeding an animal, comprising a step of administering a customized food product according to the preceding claim.

Europäisches
Patentamt
European
Patent Office
Office européen
des brevets

# EUROPEAN SEARCH REPORT

Application Number

EP 22 19 8945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/235094 A1 (MAO MATHIEU [DE] ET AL) 18 August 2016 (2016-08-18) * claims 7-9,15 * * paragraph [0155] * | 1-15 | INV. A23K50/42 A23K40/30 |
| X | US 3 930 031 A (KEALY RICHARD D) 30 December 1975 (1975-12-30) * claim 4 * * column 3, lines 3-30 * * examples 1-3 * | 1-15 | |
| X | US 2015/173397 A1 (MARTINEZ VILLAGRAN MARIA DOLORES [US] ET AL) 25 June 2015 (2015-06-25) * claims 14-15,17 * * paragraphs [0070] - [0073], [0079] - [0080] * | 1-15 | |
| X | US 5 968 569 A (CAVADINI CHRISTOF [CH] ET AL) 19 October 1999 (1999-10-19) * claim 1 * | 1-15 | |

TECHNICAL FIELDS
SEARCHED (IPC)

A23K

The present search report has been drawn up for all claims

| Place of search | Date of completion of the search | Examiner |
|---|---|---|
| The Hague | 23 February 2023 | Heirbaut, Marc |

EPO FORM 1503 03.82 (P04C01)

## ANNEX TO THE EUROPEAN SEARCH REPORT
## ON EUROPEAN PATENT APPLICATION NO.

EP 22 19 8945

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2023

| Patent document cited in search report | | Publication date | Patent family member(s) | | Publication date |
|---|---|---|---|---|---|
| US 2016235094 | A1 | 18-08-2016 | AU | 2014342584 A1 | 26-05-2016 |
| | | | AU | 2018204867 A1 | 19-07-2018 |
| | | | CN | 105682473 A | 15-06-2016 |
| | | | EP | 3065557 A1 | 14-09-2016 |
| | | | EP | 3622826 A1 | 18-03-2020 |
| | | | HK | 1225577 A1 | 15-09-2017 |
| | | | PL | 3065557 T3 | 18-05-2020 |
| | | | US | 2016235094 A1 | 18-08-2016 |
| | | | WO | 2015066009 A1 | 07-05-2015 |
| US 3930031 | A | 30-12-1975 | AU | 8275175 A | 06-01-1977 |
| | | | CA | 1052615 A | 17-04-1979 |
| | | | CH | 613098 A5 | 14-09-1979 |
| | | | DE | 2526237 A1 | 22-01-1976 |
| | | | DK | 313075 A | 12-01-1976 |
| | | | FR | 2277534 A1 | 06-02-1976 |
| | | | GB | 1459740 A | 31-12-1976 |
| | | | IT | 1036984 B | 30-10-1979 |
| | | | JP | S5133077 A | 19-03-1976 |
| | | | JP | S5329631 B2 | 22-08-1978 |
| | | | LU | 72931 A1 | 04-02-1976 |
| | | | NL | 7507250 A | 13-01-1976 |
| | | | NO | 140485 B | 05-06-1979 |
| | | | SE | 406541 B | 19-02-1979 |
| | | | US | 3930031 A | 30-12-1975 |
| US 2015173397 | A1 | 25-06-2015 | AU | 2014368875 A1 | 21-07-2016 |
| | | | CA | 2933189 A1 | 25-06-2015 |
| | | | CN | 106659197 A | 10-05-2017 |
| | | | EP | 3082450 A1 | 26-10-2016 |
| | | | JP | 2017501701 A | 19-01-2017 |
| | | | RU | 2016129485 A | 25-01-2018 |
| | | | US | 2015173397 A1 | 25-06-2015 |
| | | | WO | 2015095881 A1 | 25-06-2015 |
| US 5968569 | A | 19-10-1999 | AR | 011397 A1 | 16-08-2000 |
| | | | AT | 206873 T | 15-11-2001 |
| | | | AU | 740761 B2 | 15-11-2001 |
| | | | BR | 9800271 A | 29-06-1999 |
| | | | CA | 2222758 A1 | 09-07-1998 |
| | | | CN | 1192330 A | 09-09-1998 |
| | | | DE | 29724815 U1 | 22-07-2004 |
| | | | DE | 29724816 U1 | 22-07-2004 |
| | | | DE | 69707413 T2 | 16-05-2002 |
| | | | DK | 0862863 T3 | 04-02-2002 |
| | | | EP | 0862863 A2 | 09-09-1998 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 19 8945

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2023

| Patent document cited in search report | Publication date | Patent family member(s) | | Publication date |
|---|---|---|---|---|
| | | ES | 2164299 T3 | 16-02-2002 |
| | | JP | 4308337 B2 | 05-08-2009 |
| | | JP | H10191916 A | 28-07-1998 |
| | | MY | 120969 A | 30-12-2005 |
| | | NZ | 329464 A | 28-01-2000 |
| | | PT | 862863 E | 29-04-2002 |
| | | US | 5968569 A | 19-10-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6669975 B
- WO 2021061743 A
- US 20100303976 A1
- WO 2015066009 A
- WO 2021087309 A

**Non-patent literature cited in the description**

- **SAMANT et al.** Dry Pet Food Flavor Enhancers and Their Impact on Palatability: A Review. *Foods,* 2021
- Merriam-Webster's Collegiate Dictionary. 1993